(19) Europäisches Patentamt
European Patent Office
Office européen des brevets

(11) EP 0 973 220 A2

(12) **EUROPEAN PATENT APPLICATION**

(43) Date of publication:
**19.01.2000 Bulletin 2000/03**

(51) Int. Cl.[7]: **H01M 8/06**

(21) Application number: **99113928.8**

(22) Date of filing: **16.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.07.1998 JP 20325898**

(71) Applicant:
**TOYOTA JIDOSHA KABUSHIKI KAISHA**
**Aichi-ken 471-8571 (JP)**

(72) Inventors:
- **Yamashita, Masashi**
  **Toyota-shi, Aichi-ken 471-8571 (JP)**
- **Yamaoka, Masaski**
  **Toyota-shi, Aichi-ken 471-8571 (JP)**
- **Nagamiya, Kiyomi**
  **Toyota-shi, Aichi-ken 471-8571 (JP)**

(74) Representative:
**Bühling, Gerhard, Dipl.-Chem. et al**
**Patentanwaltsbüro**
**Tiedtke-Bühling-Kinne & Partner**
**Bavariaring 4**
**80336 München (DE)**

(54) **Device and method for controlling reformer**

(57) A control device suitably heats reformate fuel so as to obtain high-quality reformate gas by stabilizing the temperature of a reforming portion regardless of load fluctuations. The control device is suitable for use with a reformer (2) that includes a heating portion (3) for heating up reformate fuel, which is to be gasified in a reforming reaction, with the aid of the heat generated by heat fuel. At least one of the amount of heat fuel (Qm) and the amount of an oxidizer (Qa) for burning the heat fuel is determined based on an amount of reforming reaction requirement.

FIG. 4

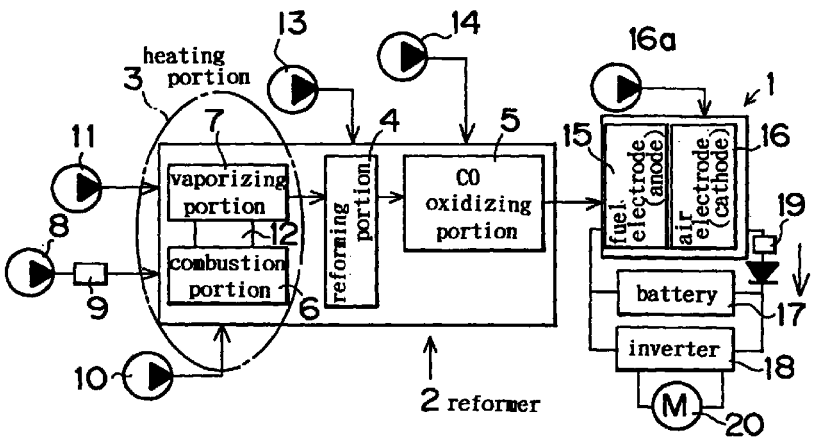


EP 0 973 220 A2

## Description

### BACKGROUND OF THE INVENTION

1. Field of Invention

The present invention relates to a reformer for reforming reformate fuel such as methyl alcohol and water into desired fuel such as gas with a high concentration of hydrogen and, more particularly, to a device and a method for controlling the reformer.

2. Description of Related Art

There is known a reformer that produces reformate gas mainly composed of hydrogen from methyl alcohol (methanol) and water. This reformer employs copper alloy and the like as a catalyst. When the catalyst is at a temperature lower than its activation temperature (for example, about 280°C), methanol is not reformed sufficiently, and there is a large amount of methanol resides in the reformate gas. The reforming reaction of methanol is an endothermic reaction. Therefore, while the catalyst is maintained at the activation temperature, heat is supplied from the outside so as to promote the reforming reaction.

In addition to a heating method using a burner or the like, there is known another method in which heat is generated in an oxidizing reaction and the heat is supplied to the reforming portion. This method utilizes what is called a partially oxidizing reaction. For example, after methanol vapor has been mixed with air, the mixture is oxidized under the catalyst so as to generate hydrogen, and the heat generated in this process is used in the reforming portion. Thus, the partially oxidizing reaction can compensate for the heat required for the reforming reaction, maintain a balance between the endothermic value and the exothermic value, and thereby eliminate the necessity to supply heat from the outside. However, this method only balances a heat budget in the reforming portion and eliminates fluctuations in temperature resulting from reformation and oxidation. In this method, however, the temperature in the reforming portion cannot be set to a target temperature.

That is, in order to set the temperature of the reforming portion to a temperature suited for the reforming reaction or activation of the catalyst, it is necessary to supply heat from the outside. Therefore, the heat generated in the combustion portion is used to heat the liquid mixture of methanol and water, whereby the mixture becomes vapor of a predetermined temperature. The vapor (the mixture of methanol and water) is supplied to the reforming portion.

When the aforementioned reformer is employed for producing fuel gas, for example, in a fuel cell, the reaction in the reformer needs to be controlled in accordance with fluctuations in the load applied to the fuel cell. In other words, the amount of reformate gas produced needs to be increased with increases in load, whereas the amount of reformate gas produced needs to be reduced with decreases in load. In order to increase and reduce the amount of reformate gas generated, the amount of the raw material fed to the reforming portion, that is, the amount of the vapor mixture of methanol and water, is increased and reduced, respectively. For this purpose, the amount of heat required to generate the vapor mixture of methanol and water of a target temperature needs to be increased and reduced respectively.

The amount of heat required to generate the vapor mixture of methanol and water can be controlled by increasing or reducing an amount of fuel (methanol and the like) that is supplied to the combustion portion for heating purposes. However, the burner for heating the raw material and the generation of heat based on the oxidizing catalyst exhibit a certain response delay in generating heat. For this reason, the suitable heating control cannot be performed easily in accordance with instantaneous fluctuations in load. That is, in case of an abrupt increase in load, the amount of heat generated in the combustion portion is insufficient with respect to the amount of methanol and water that needs to be heated. As a result, the raw material and the catalyst fall in temperature and the reforming reaction proceeds slowly, increasing the amount of residual methanol in the reformate gas. This leads to a deterioration in performance of the fuel cell. On the contrary, in case of an abrupt decrease in load, the vapor and the catalyst rise in temperature excessively due to a delay in reduction of the amount of heat needed for heating purposes. Consequently, the catalyst deteriorates in activity.

In order to eliminate such disadvantages, the invention disclosed in Japanese Published Patent No. HEI 7-105240, for example, controls temperature in accordance with fluctuations in the load by controlling a proportion of water in the raw material introduced into the reformer. That is, if the amount of water mixed into the raw material is reduced, the surplus amount of heat required to heat and vaporize the water decreases. As a result, the vapor mixture of methanol and water, which is the raw material, rises in temperature. Conversely, if the amount of water is increased, the surplus amount of heat required to heat and vaporize the water increases. As a result, the raw material falls in temperature.

In the aforementioned method, the amount of water is changed, and the amount of heat consumed or absorbed by the water is changed, whereby the temperature is controlled. Accordingly, the response of temperature control is improved in comparison with the method of controlling the generated amount of heat by changing the amount of fuel (methanol) to be subjected to combustion. However, the aforementioned method is based on a premise that the amount of heat generated by fuel combustion remains constant, and consumes part of the thus-generated heat for the purpose of heating and vaporizing water. Thus, for example, even in the case where the amount of reformate gas is reduced when the load applied to the fuel cell is low, the amount of heat generated by fuel combustion is maintained at a level exceeding a theoretically suitable amount of heat. Consequently, the fuel combustion generates an amount of heat exceeding the amount actually required to reform the reformate fuel. Thus, fuel is consumed unnecessarily.

## SUMMARY OF THE INVENTION

The present invention has been made in consideration of the above-described circumstances. It is an object of the present invention to provide a device and a method for directly controlling an amount of heat generated in a heating portion of a reformer so as to maintain reformate fuel at a temperature required for a reforming reaction, and to cause the reforming reaction to proceed in a suitable manner without adversely affecting fuel consumption.

In order to accomplish the aforementioned object, embodiments of the present invention control fuel and an oxidizer on the basis of various factors, which range from the supply of fuel and the oxidizer to a heat generating portion for heating reformate fuel to combustion thereof and generation of heat.

According to a first aspect of the present invention, there is provided a device for controlling a reformer for producing reformate gas by reforming a raw material introduced into the reformer. The present invention comprises a heater provided in the reformer to heat the raw material introduced into the reformer using heat generated in a reaction of heat fuel (supplied to the heater) with an oxidizer. The device further comprises a control system that calculates an amount of the raw material required to produce a desired amount reformate gas, and that determines at least one of an amount of the heat fuel supplied to the heater and an amount of the oxidizer, based on the determined amount of the raw material.

In some example or embodiments, both of the amount of the heat fuel and the amount of the oxidizer can be determined, based on the determined amount of the raw material.

In the first aspect, the oxidation of heat fuel generates an amount of heat corresponding to a change in the amount of reforming reaction requirement. Therefore, the present invention can prevent the temperature of the reforming reaction from fluctuating, to continuously maintain the reforming reaction in a favorable state.

Furthermore, the control system of the device can determine an amount of the heat fuel and an amount of the oxidizer, based on the amount of reforming reaction requirement and a desired ratio between the amount of heat fuel and the amount of the oxidizer. The desired ratio is preferably an optimal ratio.

In this manner, heat is generated in a suitable manner by the oxidation of the heat fuel, whereby the fuel consumption of the heat fuel is improved.

Furthermore, in addition to the features of the above aspect, the device can comprise a detector that detects a ratio between the amount of heat fuel and the amount of the oxidizer. The control system can change at least one of the amount of heat fuel and the amount of the oxidizer such that the detected ratio becomes the desired ratio.

In this manner, in addition to an enhancement in oxidation efficiency and in fuel consumption, the temperature of the reforming reaction can be controlled with higher precision.

Alternatively, the device can comprise a temperature detector that detects a temperature of the heater. The control system can change one of the amount of the heat fuel and the amount of the oxidizer based on the detected temperature of the heater.

In this manner, the amount of heat generated in the reaction of the heat fuel with the oxidizer is controlled in accordance with a temperature of the heating portion, so that the heating portion can be maintained at a target temperature.

Still further, the device can comprise a temperature detector that detects a temperature of the heater, and a detector that detects a change in the amount of heat generated in the heater as a result of a change in amount of the heat fuel that is supplied or in amount of the oxidizer. The control system can change one of the amount of the heat fuel and the amount of the oxidizer, based on the detected change in the amount of heat.

In the above aspect, the amounts of the heat fuel and the oxidizer are controlled, taking into account that there is a delay between a change in the amount of the heat fuel supplied to the heating portion or in amount of the oxidizer and a change in the amount of heat subsequently generated. Thus, the temperature of the heating portion can be prevented from fluctuating, so that the reforming reaction can be maintained in an appropriate state.

## BRIEF DESCRIPTION OF THE DRAWINGS

The foregoing and further objects, features and advantages of the present invention will become apparent from the following description of a preferred embodiment with reference to the accompanying drawings, wherein:

Fig. 1 is a flowchart illustrating an example of control performed in an embodiment of a control device of the present invention;

Fig. 2 is a flowchart illustrating another example of control performed in the control device of the present invention;

Fig. 3 shows an example of a map for determining a target air-fuel ratio based on a detected temperature of a combustion portion;

Fig. 4 is a schematic view of the overall construction of a system having a reformer connected to a fuel cell; and

Fig. 5 is a schematic view of the construction and an embodiment of a control system of the heating portion of the reformer of Fig. 4.

## DETAILED DESCRIPTION OF PREFERRED EMBODIMENTS

An embodiment of the present invention will be described with reference to the accompanying drawings. First of all, the overall construction of a reformer incorporated into a system that generates electricity with the aid of a fuel cell. As shown in Fig. 4, a reformer 2 is connected to an anode 15 side of a fuel cell 1 will be described. The reformer 2 reforms a mixture of methanol as reformate fuel and water into carbon dioxide and hydrogen. The reformer 2 is equipped with a heating portion 3 for heating the reformate fuel, a reforming portion 4 and a carbon monoxide (CO) oxidizing portion 5.

The heating portion 3 generates vapor of the mixture of methanol and water by heating reformate fuel. The heating portion 3 comprises a combustion portion 6 for generating heat for heating the reformate fuel and a vaporizing portion 7 for vaporizing the reformate fuel using the heat generated by the combustion portion 6. The combustion portion 6 may be configured such that a burner causes heat fuel to burn or that a catalyst oxidizes heat fuel. Accordingly, a pump 8 for feeding methanol, which is an example of a suitable heat fuel, is connected to the combustion portion 6 via an injector 9. Further, an air feed portion 10 feeds air, which is an example of a suitable oxidizer. The air feed portion 10 is typically an air pump.

A pump 11, serving as a reformate fuel feed portion for feeding the liquid mixture of methanol and water, is connected to the vaporizing portion 7. The vaporizing portion 7 is coupled to the combustion portion 6 such that heat can be transmitted therebetween. The more specific construction of an embodiment of the heating portion 3 is described below.

The reforming portion 4 generates gas with a high concentration of hydrogen, mainly by a reforming reaction of methanol with water. More specifically, a copper-based catalyst with an activation temperature of 280°C is typically used to generate reformate gas substantially comprising hydrogen gas, by a reforming reaction represented by equation (1) shown below.

$$CH_3OH + H_2O \rightarrow CO_2 + 3H_2 \quad (1)$$

Further, the reforming portion 4 generates hydrogen gas and heat by a partially oxidizing reaction of methanol. Hence, air is fed from the air feed portion 13 to the reforming portion 4. That is, the reforming reaction represented by the above equation (1) is an endothermic reaction. On the other hand, the partially oxidizing reaction is represented by equation (2) shown below is an exothermic reaction. Therefore, the temperature of the reforming portion 4 is kept substantially constant by balancing the endothermic and exothermic values.

$$CH_3OH + 1/2O_2 \rightarrow 2H_2 + CO_2 \quad (2)$$

However, the reforming reaction represented by the equation (1) and the partially oxidizing reaction represented by the equation (2) occur only in ideal circumstances. Also, carbon dioxide is reversibly changed into carbon monoxide. Therefore, the inclusion of some carbon monoxide into the reformate gas is inevitable. Because carbon monoxide poisons a catalyst at the anode 15 of the fuel cell 1, the CO oxidizing portion 5 is provided so as to reduce the carbon monoxide. The CO oxidizing portion 5 is provided with a CO oxidizing catalyst and an air feed portion 14. The reformate gas generated in the reforming portion 4 is flowed through the CO oxidizing portion 5 so that the carbon monoxide contained in the reformate gas is oxidized by oxygen contained in air.

The fuel cell 1 comprises a plurality of unit cells that are interconnected to one another. For example, each unit cell can have a construction wherein a high-molecular electrolyte film permeable to protons is interposed between the anode 15 and a cathode 16. Each of the anode 15 and cathode 16 comprise a diffusion layer and a reaction layer. The reaction layer at the anode 15 has a porous structure wherein a catalyst material such as platinum, platinum alloy or ruthenium is carried, for example, on a carbon support. The anode 15 communicates with the reformer 2, to which reformate gas mainly containing hydrogen gas is fed. An air feed portion 16 such as a pump is connected to the cathode 16 so as to feed oxygen, which reacts with hydrogen in the reformate gas.

External loads such as a battery 17 and an inverter 18 are connected to the respective electrodes 15 and 16 to form a closed circuit. The closed circuit incorporates a current sensor 19. Furthermore, a motor 20 is connected to the inverter 18. For example, the motor 20 can serve as a power source for driving a vehicle.

Fig. 5 shows an exemplary embodiment of the aforementioned heating portion 3 in conjunction with a control system. The combustion portion 6 includes a combustion chamber 21. In the combustion chamber 21, while methanol as heating fuel (hereinafter referred to as "combustion methanol") and air are caused to flow in a certain direction, the combustion methanol is oxidized. The injector 9 is disposed on an inlet side of the combustion chamber 21, and combustion methanol is sprayed into the combustion chamber 21 through the injector 9. Further, an air feed port 22 is formed on the inlet side of the combustion chamber 21. The air feed port 22 opens near to where combustion methanol is sprayed. An air pump 10 is connected to the air feed port 22.

A heat exchanger 12 (Fig. 4) is disposed inside the combustion chamber 21. The heat exchanger 12 has a plurality of vaporization pipes 23 that air-tightly penetrate the combustion chamber 21. The vaporization pipes 23 communicate at one end with a liquid feed pipe 24, and at the other end with a vapor pipe 25. Furthermore, an oxidizing catalyst 26 is installed in a portion of an outer peripheral face of each of the vaporization pipes 23, which portion is located inside the combustion chamber 21. Thus, in the oxidizing catalysts 26, the combustion methanol fed into the combustion chamber 21 is oxidized by oxygen contained in air and then generates heat. A temperature sensor 27 for detecting the temperature resulting from this combustion is attached to each of the catalysts 26, or to each of the vaporization pipes 23.

An exhaust pipe 28 is connected to a downstream side of the combustion chamber 21. An air-fuel ratio sensor (A/F sensor) 29 is disposed at an end portion of the exhaust pipe 28 on the side of the combustion chamber 21. The A/F sensor 29 outputs an electric signal corresponding to a concentration of oxygen in exhaust gas. Accordingly, the ratio A/F (air/fuel) of oxygen to the combustion methanol fed into the combustion portion 6 can be detected.

The liquid feed pipe 24 feeds the liquid mixture of methanol as reformate fuel and water to the vaporization pipes 23. The liquid feed pipe 24 is connected to the liquid feed pump 11, which constitutes the reformate fuel feed portion. The vapor pipe 25 constitutes a tubular passage for feeding the vapor mixture of water and methanol generated in the vaporization pipes 23 to the reforming portion 4. A vapor temperature sensor 30 for detecting the temperature of vapor is disposed inside the vaporization pipe 25.

The control system comprises one or more controllers, such as an electronic control unit (ECU) 31, to electrically control the respective pumps 8, 10 and 11 and suitably adjust discharge amounts thereof. The electronic control unit 31 comprises a microcomputer, which typically includes a central processing unit (CPU), storage devices (RAM, ROM) and an I/O interface. Detection signals from the respective sensors 27, 29 and 30 are inputted to the electronic control unit 31 as control data. Furthermore, the current sensor 19 for detecting a load of the fuel cell 1 outputs a detection signal, which is inputted to the electronic control unit 31.

The basic operation of the reformer 2 will now be described. The liquid feed pump 11 feeds the liquid mixture of methanol as reformate fuel and water to the vaporization pipes 23 through the liquid feed pipe 24. Combustion methanol is sprayed from the injector 9 into the combustion chamber 21, to which air is fed by the air pump 10. The combustion methanol and air undergo an oxidizing reaction (i.e., burn) in the oxidizing catalyst 26 and generate heat. This heat in turn heats the vaporization pipes 23, and the liquid mixture contained in the vaporization pipes 23 is vaporized so that the vapor mixture of water and methanol is generated. The exhaust gas generated by combustion is discharged to the outside through the exhaust pipe 28.

The vapor mixture generated in the vaporization pipes 23 is delivered to the reforming portion 4 through the vapor pipe 25. The copper-based catalyst provided in the reforming portion 4 causes a reforming reaction of methanol with water. Consequently, reformate gas substantially comprising hydrogen gas and carbon dioxide gas is generated. Simultaneously, there is caused a partially oxidizing reaction of the air fed from the air feed portion 13 to the reforming portion 4 with methanol. The partially oxidizing reaction is represented by the equation (2) above. As a result of the partially oxidizing reaction, hydrogen gas and carbon dioxide gas are generated. The reforming reaction of methanol is an endothermic reaction, whereas the partially oxidizing reaction of methanol is an exothermic reaction. Hence, these reactions are controlled such that the endothermic value becomes equal to the exothermic value. Thereby, the heat budget in the reforming portion 4 is balanced so that the temperature of the reforming portion 4 is kept substantially constant. Because heat substantially neither enters nor leaves the reforming portion 4, the heat generated in the combustion portion 6 is at least substantially used to heat and vaporize reformate fuel.

In principle, the gas generated in the reforming portion 4 substantially comprises hydrogen gas and carbon dioxide gas. In fact, however, a small amount of carbon monoxide (about 1% with respect to $CO_2$) is generated. While reformate gas passes through the CO oxidizing portion 5, most of the carbon monoxide reacts with oxygen contained in the air fed from the air feed portion 14 and then becomes carbon dioxide. The reformate gas with a high concentration of hydrogen is supplied to the anode 15 of the fuel cell 1, whereby hydrogen ions and electrons are generated in the reaction layer thereof The hydrogen ions permeate the electrolyte film, react with oxygen on the side of the cathode 16 and generate water. The electrons generate motive power through the external loads.

The amount of reformate gas that is generated in the reformer 2 is controlled to an amount corresponding to the load applied to the fuel cell 1. The amount of vapor mixture of methanol and water generated in the heating portion 3 is also controlled to an amount corresponding to the load applied to the fuel cell 1. With a view to heating and vaporizing reformate fuel in accordance with the load applied to the fuel cell 1, the control device according to the present invention controls combustion in the combustion portion 6 as follows.

Fig. 1 is a flowchart illustrating an exemplary embodiment of such control. First, the amount Qk (mol/s) of reformate fuel (the liquid mixture of methanol and water) is calculated as an amount of reformate fuel corresponding to an amount of hydrogen required in the fuel cell 1, based on a detection value of the current sensor 19 indicative of the load applied to the fuel cell 1 (step S1). In this case, the ratio of S/C (steam/carbon) is set to a desired value, for example, to about 2.

Then, the amount of combustion methanol required to turn the reformate gas into vapor of a predetermined target temperature is calculated (step S2). First, reformate gas of 1 mol/s is heated and turned into vapor. Then, the amount Hr (kJ/mol) of heat required to heat the vapor up to a target temperature Ter (°C) (for example, 280°C) at which the catalyst in the reforming portion 4 is highly activated (that is, the target temperature where reformate gas with a high concentration of hydrogen can be produced) is calculated based on equation (3) below.

$$Hr = Hrm + Hrw \tag{3}$$

In equation (3), Hrm represents an amount (kJ/mol) of heat required for methanol and Hrw represents an amount (kJ/mol) of heat required for water. The amounts of heat Hrm and Hrw are calculated based on equations (4) and (5), respectively, shown below.

$$Hrm = 1 \times \{Clm \times (Tbm-Ta) + Ebm + Cgm \times (Ter-Tbm)\} \tag{4}$$

$$Hrw = 2 \times \{Clw \times (Tbw-Ta) + Ebw + Cgw \times (Ter-Tbw)\} \tag{5}$$

In these equations,

Clm represents an average specific heat capacity (kJ/°C/mol) of methanol in its liquid phase;
Clw represents an average specific heat capacity (kJ/°C/mol) of water in its liquid phase;
Ebm represents the vaporization latent heat (kJ/mol) of methanol;
Ebw represents the vaporization latent heat (kJ/mol) of water;
Cgm represents an average specific heat capacity (kJ/°C/mol) of methanol in its gaseous phase;
Cgw represents an average specific heat capacity (kJ/°C/mol) of water vapor;
Tbm represents the boiling temperature (°C) of methanol;
Tbw represents the boiling temperature (°C) of water; and
Ta represents the atmospheric temperature (°C).

Furthermore, in the case where a catalyst is used in the combustion portion 6 so as to burn combustion methanol, the oxidizing reaction is expressed by equation (6) shown below. Therefore, taking into account that the aforementioned required amount Hr of heat is transmitted to the reformate fuel via the heat exchanger 12, the amount Qm (mol/s) of combustion methanol is determined based on equation (7) below.

$$CH_3OH + 3/2O_2 \rightarrow 2H_2O + CO_2 + 645.29 \text{ (kJ/mol)} \tag{6}$$

$$Qm = Qk \times Hr / (645.29 \times \eta) \tag{7}$$

In the formula (7), η represents an effectiveness (typically about 0.7) of the heat exchanger 12.

The length of time required for reformate fuel to travel to the vaporizing portion 7 is longer than the length of time required for combustion methanol to cause a reaction after being fed to the combustion chamber 21. Therefore, the amount of combustion methanol is changed based on a delay in transportation of the reformate fuel (step S3). That is, if the length of delay time is defined as τ, Qm (mol/s) is changed such that $Qm'(t) = Qm(t - \tau)$. More specifically, the changed amount Qm' of combustion methanol is determined based on equation (8) below, using a control period DT and a history $Qm_{old}$ of a preceding control period.

$$Qm' = Qm_{old} \times \tau/(DT + \tau) + Qm \times DT/(DT + \tau) \tag{8}$$

Furthermore, in the case where reformate fuel is heated by the heat generated by combustion of combustion methanol, the combustion efficiency of the combustion methanol, or the effectiveness of the heat exchanger, influences the heating process, which may not proceed as expected at the beginning. That is, the amount of combustion methanol is changed based on the temperature of vapor at the outlet of the vaporizing portion 7 (step S4). According to one example of such change, provided that the temperature of vapor detected by the vapor temperature sensor 30 is equal to Te (°C), the second changed amount Qm'' of combustion methanol is determined based on equation (9) below.

$$Qm'' = Qm' + Kp \times (Te-Ter) + K1 \times \Sigma\,(Te-Ter) \qquad (9)$$

In equation (9), Kp and K1 are control parameters, and Σ (Te - Ter) represents a cumulative value of differences between the target temperature of the vapor and detected temperature of the vapor.

According to another example, the second changed amount of combustion methanol may be determined based on equation (10) below.

$$Qm'' = Qm' + Qmb \qquad (10)$$

In equation (10),

when $Te-Ter > \varepsilon$, $Qmb = Qm' \times \Delta$, and
when $Te - Ter < \varepsilon$, $Qmb = Qm' \times (-\Delta)$.
ε and Δ are control parameters.

The amount of reformate fuel determined in step S1 corresponds to an amount of raw material required to produce a desired amount of reformate gas (an amount of reforming reaction requirement). Therefore, steps S2 to S4 determine an amount of the oxidizer or heat fuel based on the amount of reforming reaction requirement. Furthermore, the step S3 performs a change based on a response delay. A command signal is outputted to the injector 9 such that combustion methanol of the second changed amount Qm'' thus determined is supplied to the combustion portion 6 of the heating portion 3 (step S5). In this case, the pump 8 is controlled such that the pressure on the upstream side of the injector 9 substantially remains constant (for example, at about 2 atm). This is because the command value given to the injector 9 and the discharge amount preferably maintain a predetermined relationship. As a result, the amount of combustion fuel supplied from the injector 9 is controlled precisely.

The amount of heat taken away by combustion exhaust gas changes depending on the amount of air fed to the combustion chamber 21 with respect to the aforementioned amount of combustion methanol. Simultaneously, the amount of heat contributing to the heating of reformate fuel changes. That is, according to an exemplary embodiment of control shown in Fig. 2, the amount of air is controlled while the amount of combustion methanol is controlled. Referring to Fig. 2, first the second changed amount Qm'' of combustion methanol is calculated (step S11). The second changed amount Qm'' of combustion methanol has been determined and changed in the aforementioned step S2 or S4 shown in Fig. 1. The amount Qa of combustion air corresponding to the second changed amount Qm'' of combustion methanol is then determined.

In the oxidizing reaction of methanol, as shown in equation (6), 1 mole of methanol reacts with 3/2 mole of oxygen. Based on this ideal ratio, the actual combustion efficiency, the content of oxygen in air and the like are taken into account, whereby the optimal mixture ratio of air to methanol, that is, the optimal air-fuel ratio is determined. The optimal air-fuel ratio can also be determined through an experiment such that the temperature of vapor and the temperature of the combustion portion 6 become suitable. In Fig. 2, the required amount Qa of air with respect to the second changed amount Qm'', which has been determined in step S11 such that the air-fuel ratio becomes an optimal air-fuel ratio (a target air-fuel ratio λr), is determined (step S12). The required amount Qa of air is determined based on equation (11) below.

$$Qa = \lambda r \times Qm'' \qquad (11)$$

Also, in the case where air is fed to the combustion portion 6 so as to cause an oxidizing reaction, there is a delay time until reformate fuel is fed to the vaporizing portion 7. Therefore, a change is made according to the delay (step S13). Provided that the length of delay time is τ, the first changed amount Qa' of air is expressed as follows: $Qa'(t) = Qa(t - \tau)$. Therefore, the change is made in the same manner as in the aforementioned case where the delay concerning combustion methanol is changed.

The amount of air that is supplied may deviate from a target amount. Therefore, the amount of air supply is changed based on a concentration of oxygen N(O) contained in the exhaust gas discharged from the combustion chamber 21 (step S14). That is, the A/F sensor 29 disposed in the exhaust pipe 28 downstream of the combustion chamber 21 detects a concentration N(O) of oxygen contained in the exhaust gas discharged from the combustion chamber 21. The target concentration N(O)r of oxygen contained in the exhaust gas is determined in the case where air of the first changed amount Qa' has reacted completely. Thus, the amount of air supply is changed such that the detected concentration N(O) of oxygen coincides with the target concentration N(O)r of oxygen. This is equivalent to a process wherein the ratio of the methanol fed to the combustion chamber 21 to oxygen is detected and the amount of air supply is changed based on the thus-detected ratio. For example, the second changed amount Qa'' of air is calculated based on equation (12) shown below.

$$Qa'' = Qa' + Kp1 \times (N(O) - N(O)r) + Ki1 \times \Sigma(N(O) - N(O)r) \quad (12)$$

In equation (12), Kp1 and Ki1 are control parameters, and $\Sigma$ (N(O) - N(O)r) is a cumulative value of differences between an actually measured concentration of oxygen and a target concentration of oxygen.

According to another exemplary embodiment of change according to the present invention, the second changed amount Qa'' of combustion air is determined based on equation (13) below.

$$Qa'' = Qa' + Qb \quad (13)$$

In equation (13),

when $N(O) - N(O)r > \varepsilon 1$ , $Qb = Qb + \Delta 1$ , and
when $N(O) - N(O)r > -\varepsilon 1$ , $Qb = Qb - \Delta 1$.
$\varepsilon 1$ and $\Delta 1$ are control parameters.

Furthermore, the temperature at the combustion portion 6 changes depending on the progress of combustion of combustion methanol. Therefore, in order to maintain the combustion portion 6 at a suitable temperature, the amount of air supply is changed based on a detected temperature (step S15). As described above, the temperature sensors 27 detect exothermic temperatures at the respective oxidizing catalysts 26 in the combustion portion 6. The mean value, maximum value or the like of the respective temperatures detected by the temperature sensors 27 is adopted as a representative temperature Tb. The target air-fuel ratio $\lambda r$ is changed according to the representative temperature Tb. The target air-fuel ratio $\lambda r$ may be determined by calculation or alternatively based on a graph such as shown in Fig. 3.

That is, if the detected representative temperature Tb is higher than a predetermined temperature $\alpha$ (°C), the target air-fuel ratio $\lambda r$ is set to a large value corresponding to the temperature Tb. If the representative temperature Tb has exceeded another predetermined temperature $\beta$ (°C), the target air-fuel ratio $\lambda r$ is maintained at a predetermined upper limit value. In other words, within a predetermined temperature range, the amount of air is increased with an increase in temperature detected at the combustion portion 6, whereby combustion fuel is made lean. Conversely, the amount of air is reduced with a decrease in temperature at the combustion portion 6, whereby combustion fuel is made rich. Consequently, when the temperature may become excessively high, the amount of combustion of combustion methanol is restricted, and the amount of heat taken away by air increases. Thus, the temperature at the combustion portion 6 is prevented from rising. Conversely, when the temperature may fall, the amount of combustion of combustion methanol increases, so that the temperature rises.

A command signal is outputted to the injector 9 so that the thus-determined amount Qm'' of combustion methanol is fed to the combustion portion 6 (step 16). This corresponds to the control performed in step S5 shown in Fig. 1. Further, a command signal is outputted to the air pump 10 such that the changed amount Qa'' of air is fed to the combustion portion 6 (step S17).

Therefore, the aforementioned steps S12 to S15 determine an amount of the oxidizer based on an amount of reforming reaction requirement. More particularly, the step S12 determines an amount of the oxidizer, the step S14 changes an amount of the oxidizer, and the step S15 changes an amount of the oxidizer and changes a ratio of heat fuel to the oxidizer. The step S13 changes an amount of the oxidizer based on a response delay.

As described above, according to the exemplary embodiment of control shown in Fig. 1, the amount of combustion methanol for heating and vaporizing reformate fuel is determined in accordance with an amount of reformate fuel corresponding to a load applied to the fuel cell 1. The amount of combustion methanol is changed based on a response delay prior to the generation of heat resulting from combustion of the fuel, or based on an actually measured temperature of reformate fuel vapor. Hence, even in the case where the amount of reformate fuel is increased or reduced in response to a change in load of the fuel cell 1, the temperature of the reformate fuel supplied to the vaporizing portion 7 can be set within a target range. As a result, there is little or no possibility of the temperature of the reforming portion 4 becoming excessively low or excessively high. Accordingly, the catalyst for causing a reforming reaction can be maintained in an optimal activation state, so that high-quality reformate gas with substantially no carbon monoxide or residual methanol can be obtained.

Furthermore, according to the exemplary embodiment of control shown in Fig. 2, the amount of air supply suitable for the amount of reformate fuel is determined. The thus-determined amount of air supply is further corrected based on a response delay, an actually measured air-fuel ratio, or a temperature of combustion. Because air of the thus-determined amount is supplied, the temperature of reformate fuel vapor generated in the vaporizing portion 7 can be set within a suitable range. Furthermore, even in the case where the amount of reformate fuel has changed as a result of fluctuations in load applied to the fuel cell 1, the amount of heat that is generated is changed in accordance with an amount of reformate fuel. Therefore, it is possible to at least substantially prevent the temperature of reformate fuel vapor from fluctuating. Consequently, as is the case with the control example of combustion methanol shown in Fig. 1, the reforming portion 4 is maintained at a suitable temperature, whereby high-quality reformate gas can be constantly obtained.

In the above described embodiments, the ECU 31 (controller) is implemented as a programmed general purpose computer. It will be appreciated by those skilled in the art that the controller can be implemented using a single special purpose integrated circuit (e.g., ASIC) having a main or central processor section for overall, system-level control, and separate sections dedicated to performing various different specific computations, functions and other processes under control of the central processor section. The control system also can be a plurality of separate dedicated or programmable integrated or other electronic circuits or devices (e.g., hardwired electronic or logic circuits such as discrete element circuits, or programmable logic devices such as PLDs, PLAs, PALs or the like). The control system can be implemented using a suitably programmed general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the programs shown in Figs. 1 and 2 can be used in the control system. A distributed processing architecture can be used for maximum data/signal processing capability and speed.

In the aforementioned exemplary embodiments, the present invention is applied to a control device for a reformer for supplying the fuel cell 1 with fuel gas. However, the present invention is not limited to any of the above-mentioned examples, and it is possible to select a device or system for supplying reformate gas as the case requires. For example, the present invention may also be applied to a reformer for reforming other types of reformate fuel. For example, hydrocarbons other than methanol can be reformed according to embodiments of the present invention.

Furthermore, in embodiments, another parameter which changes in accordance with an amount of reformate fuel, such as a current value as a load applied to the fuel cell 1 or the like, may be adopted as an amount of reforming reaction requirement.

While the present invention has been described with reference to what is presently considered to be a preferred embodiment thereof, it is to be understood that the present invention is not limited to the disclosed embodiment or construction. On the contrary, the present invention is intended to cover various modifications and equivalent arrangements. In addition, while the various elements of the disclosed invention are shown in various combinations and configurations, which are exemplary, other combinations and configurations, including more, less or only a single embodiment, are also within the spirit and scope of the present invention.

A control device suitably heats reformate fuel so as to obtain high-quality reformate gas by stabilizing the temperature of a reforming portion regardless of load fluctuations. The control device is suitable for use with a reformer (2) that includes a heating portion (3) for heating up reformate fuel, which is to be gasified in a reforming reaction, with the aid of the heat generated by heat fuel. At least one of the amount of heat fuel (Qm) and the amount of an oxidizer (Qa) for burning the heat fuel is determined based on an amount of reforming reaction requirement.

## Claims

1. A device for controlling a reformer (2) for producing reformate gas by reforming a raw material introduced into the reformer, characterized by comprising:

   heating means (3) in the reformer for heating the raw material introduced into the reformer using heat generated in a reaction of heat fuel and an oxidizer in the heating means;
   calculation means (31) for calculating an amount of the raw material (Qk) required to produce reformate gas of a desired amount; and
   means (S2, S3, S4, S12, S13, S14, S15) for determining at least one of an amount of heat fuel (Qm) supplied to the heating means (3) and an amount of the oxidizer (Qa), based on the calculated amount of the raw material (Qk).

2. The device according to claim 1, characterized by further comprising:

   temperature detecting means for detecting a temperature of the heating means(3); and

changing means (S15) for changing at least one of the amount of heat fuel (Qm) and the amount of the oxidizer (Qa) based on the detected temperature.

**3.** The device according to claim 1, characterized by further comprising:

detecting means for detecting a change in amount of heat generated in the heating means(3) as a result of a change in the amount of the heat fuel that is supplied or in the amount of the oxidizer; and
changing means (S6) for changing at least one of the amount of the heat fuel (Qm) and the amount of the oxidizer (Qa), based on the detected change in amount of heat.

**4.** A device for controlling a reformer (2) for producing reformate gas by reforming a raw material introduced into the reformer, characterized by comprising:

heating means (3) in the reformer for heating the raw material introduced into the reformer using heat generated in a reaction of heat fuel and an oxidizer in the heating means;
calculation means (31) for calculating an amount of the raw material (Qk) required to produce reformate gas of a desired amount; and
means (S2, S3, S4, S12, S13, S14, S15) for determining one of an amount of heat fuel (Qm) supplied to the heating means (3) and an amount of the oxidizer (Qa), based on the calculated amount of the raw material (Qk).

**5.** The device according to claim 4, characterized by further comprising:

means (S12) for determining the other of the amount of heat fuel (Qm) supplied to the heating means (3) and the amount of the oxidizer (Qa), based on the calculated amount of the raw material (Qk) and a optimal ratio between the amount of heat fuel and the amount of the oxidizer.

**6.** The device according to claim 5, characterized by further comprising:

detecting means (31) for detecting a ratio between the amount of heat fuel and the amount of the oxidizer; and
changing means (S14) for changing at least one of the amount of heat fuel (Qm) and the amount of the oxidizer (Qa) based on the detected temperature.

**7.** The device according to claim 5, characterized by further comprising:

temperature detecting means for detecting a temperature of the heating means(3); and
changing means (S15) for changing the optimal ratio between the amount of the heat fuel (Qm) and the amount of the oxidizer (Qa) based on the detected temperature of the heater.

**8.** A method for controlling a reformer for producing reformate gas, characterized by comprising:

calculating an amount of a raw material sufficient to produce a desired amount of the reforming gas;
determining at least one of an amount of heat fuel (Qm) to be supplied to a heating means (3) in the reformer and an amount of an oxidizer(Qa) , based on the calculated amount of the raw material(Qk);
introducing the raw material into the reformer(2); and
introducing the heat fuel and the oxidizer into the heating means(3) so as to heat the introduced raw material using heat generated in a reaction of the heat fuel and the oxidizer.

**9.** The method according to claim 8, characterized by further comprising:

detecting a temperature of the heating means(3); and
changing at least one of the amount of the heat fuel (Qm) and the amount of the oxidizer (Qa) supplied to the heating means based on the detected temperature of the heating means.

**10.** The method according to claim 8, characterized by further comprising:

detecting a change in the amount of heat generated in the heating means (3); and
changing at least one of the amount of the heat (Qm) fuel and the amount of the oxidizer (Qa), based on the detected change in amount of heat generated such that the amount of heat generated in the heating means substantially equals a desired amount of heat.

**11.** A method for controlling a reformer for producing reformate gas, characterized by comprising:

calculating an amount of a raw material sufficient to produce a desired amount of the reforming gas;
determining one of an amount of heat fuel (Qm) to be supplied to a heating means (3) in the reformer and an amount of an oxidizer(Qa), based on the calculated amount of the raw material(Qk);
introducing the raw material into the reformer(2); and
introducing the heat fuel and the oxidizer into the heating means(3) so as to heat the introduced raw material using heat generated in a reaction of the heat fuel and the oxidizer.

**12.** The method according to claim 11, characterized by further comprising determining the other of the amount of the heat fuel (Qm) supplied to the heating means (3) and the amount of the oxidizer (Qa), based on the calculated amount of the raw material (Qk) and an optimal ratio between the amount of the heat fuel and the amount of the oxidizer.

**13.** The method according to claim 12, characterized by further comprising:

detecting a ratio between the amount of heat fuel and the amount of the oxidizer supplied to the heating means(3); and
changing at least one of the amount of the heat fuel (Qm) and the amount of the oxidizer (Qa) such that the detected ratio becomes about the optimal ratio.

**14.** The method according to claim 12, characterized by further comprising:

detecting a temperature of the heating means(3); and
changing the optimal ratio between the amount of the heat fuel (Qm) and the amount of the oxidizer (Qa) based on the detected temperature of the heater.

FIG. 1

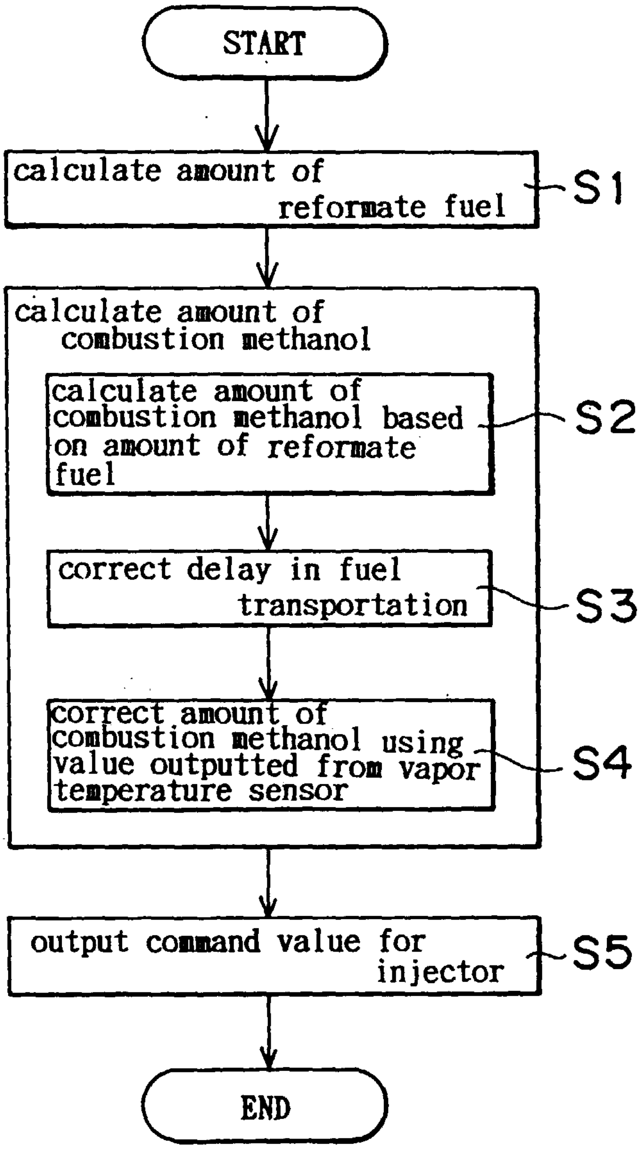
START
calculate amount of reformate fuel
S1
calculate amount of combustion methanol
calculate amount of combustion methanol based on amount of reformate fuel
S2
correct delay in fuel transportation
S3
correct amount of combustion methanol using value outputted from vapor temperature sensor
S4
output command value for injector
S5
END

FIG. 2

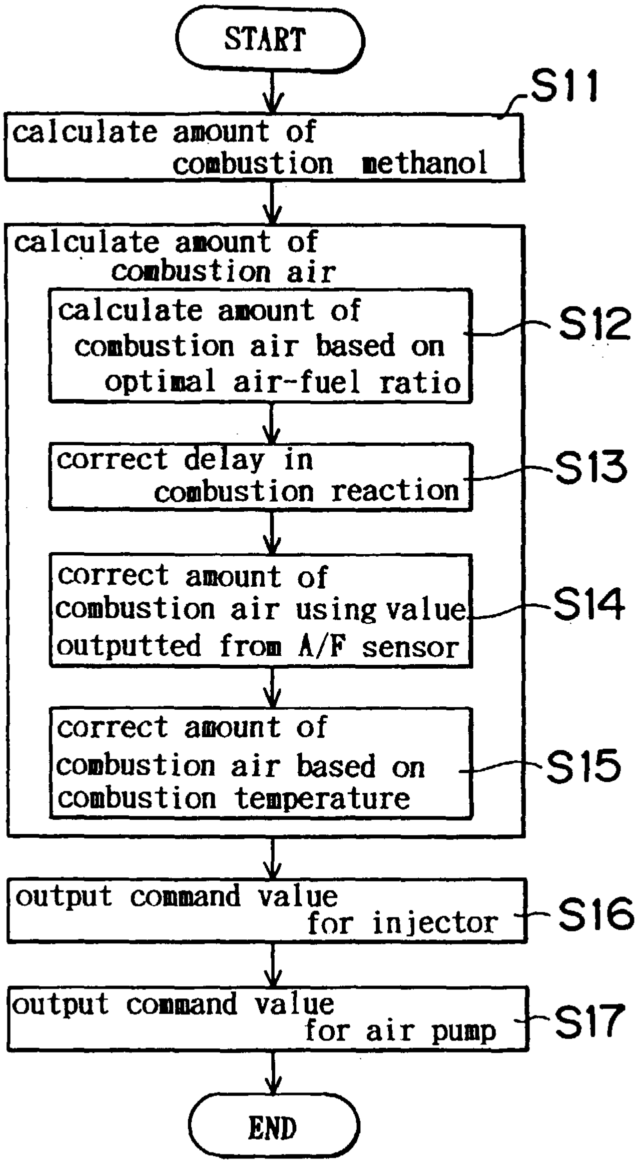
START
calculate amount of combustion methanol
S11
calculate amount of combustion air
calculate amount of combustion air based on optimal air-fuel ratio
S12
correct delay in combustion reaction
S13
correct amount of combustion air using value outputted from A/F sensor
S14
correct amount of combustion air based on combustion temperature
S15
output command value for injector
S16
output command value for air pump
S17
END

FIG. 3

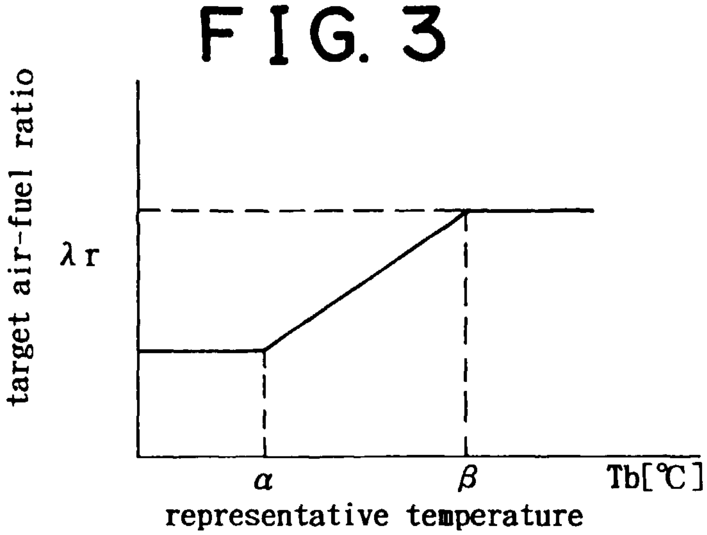
target air-fuel ratio
λr
α
β
Tb[℃]
representative temperature

# FIG. 4

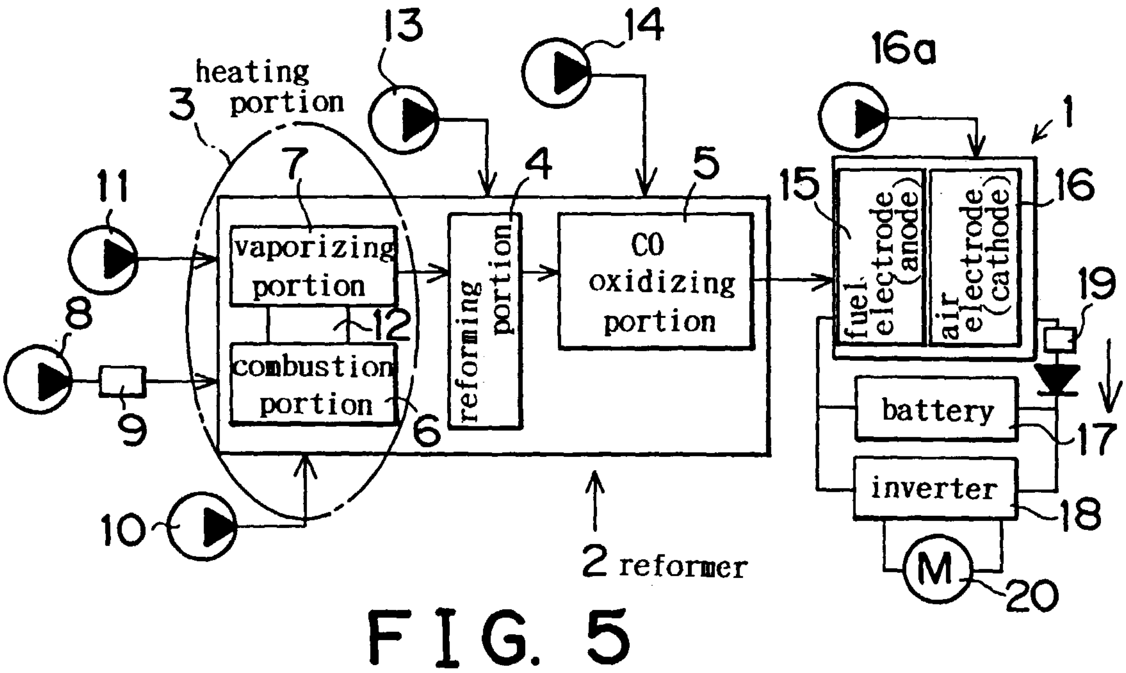
13
14
16a
heating portion
3
1
11
7
4
5
15
16
vaporizing portion
reforming portion
CO oxidizing portion
fuel electrode (anode)
air electrode (cathode)
19
8
12
combustion portion
9
6
battery
17
inverter
18
10
2 reformer
M
20

# FIG. 5

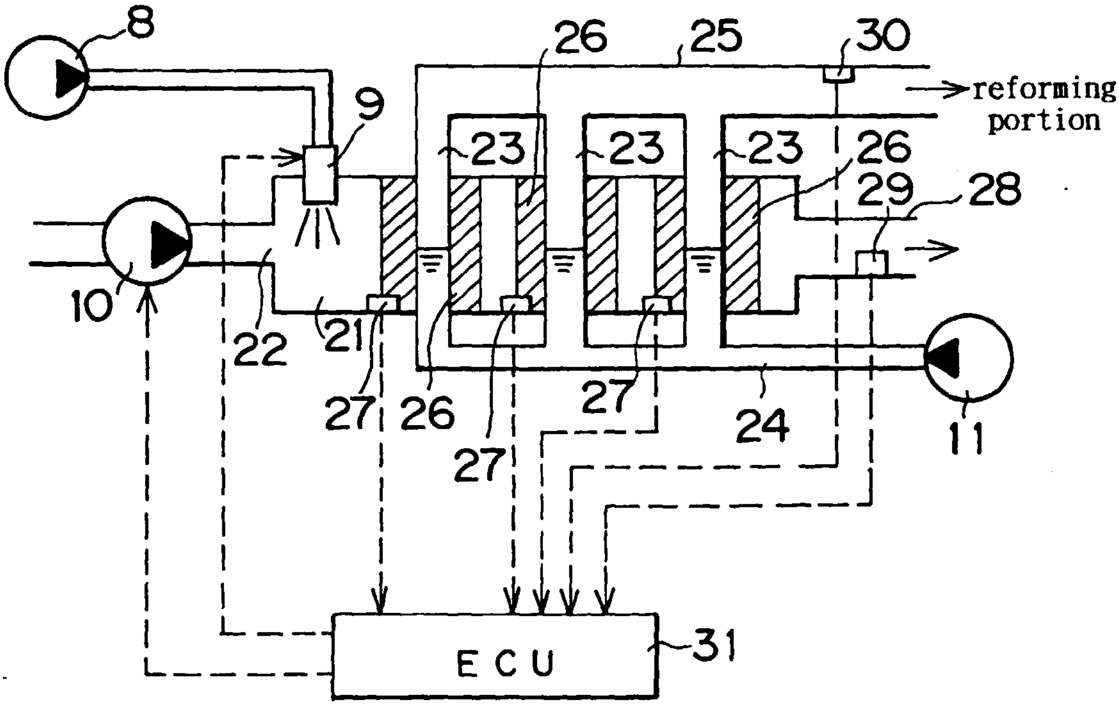
8
26
25
30
reforming portion
9
23
23
23
26
29
28
10
22
21
27
26
27
27
24
11
ECU
31